# EUROPEAN PATENT APPLICATION

(11) **EP 3 569 058 A1**
(43) Date of publication of application: **20.11.2019**
(21) Application number: 18172489.9
(22) Date of filing: 15.05.2018
(51) Int. Cl.: A01G 9/02, A01G 22/63, A01G 24/44, A01G 24/18

(54) **SYSTEM AND METHOD FOR CULTIVATING POTTED PLANTS**

(71) Applicant: Knauf Insulation d.o.o., 4220 Skofja Loka (SI)
(72) Inventor: SONNEVELD, Peter, 2692 DC's Gravenzande (NL); DIJKSHOORN, Jaco, 2675 RH Honselersdijk (NL); MAJKOVIC, Darja, 4220 Skofja Loka (SI); SUMI, Jure, 1133 Ljubljana (SI)
(74) Representative: Prüfer & Partner mbB Patentanwälte · Rechtsanwälte

(57) **Abstract**

The present invention is directed to a plant growth system comprising: (a) a container having a top opening and an inner volume; (b) a receiving structure inside the inner volume of the container, wherein said receiving structure is form-stable, and comprises or essentially consists of mineral wool; (c) a plant receiving portion formed by the receiving structure for receiving a plug comprising a plant through the top opening of the container into said plant receiving portion and holding it in place; and (d) one or more volume space(s) free of mineral wool.

## Description

The invention relates to means and methods of growing plants and in particular potted plants, using form-stable and binder-fixed mineral wool.

It has been well known for many years to propagate seeds, seedlings and cuttings for plants in a first growth substrate forming a plug and, once the plants have rooted and developed leafs, the plug is usually transferred into a second growth substrate contained in a plant pot. It is conventional for the growing process to be started at a propagator's facility and then the propagator transfers the plants at an appropriate stage to a grower's facility where the growing process is completed. Some plants such as Kalanchoe are directly planted into the final pot without a plug stage.

The first growth substrate in which an initial phase or growth, i.e. propagation, does occur is relatively small in volume, in a compartment called a plug. After the plant has grown in such initial phase to a certain stage or size of plant, it is transferred to a larger second growth substrate for growing such as a block which typically occupies essentially the whole inner volume of a plant pot, or the plant is transferred directly into a plant pot, respectively except at volume portions where the plug is, or is to be, introduced.

Phalaenopsis is an orchid genus of approximately 60 species. They are one of the most popular flower plants sold as potted plants. They were among the first tropical orchids in Victorian collections. Phalaenopsis currently represents one of the largest horticultural cultivars.

In orchid horticulture, plant propagators supply the plants in plastic trays with a small layer of gel (laboratory multiplied material) or in plugs. Plants from plugs have the advantage that there will generally be less losses in weak plants, and a shortening in growth in comparison to plants from trays. Plugs typically comprise cocopeat and regular peat as the main components of the substrate. The plants are typically propagated from 20 to 28 weeks at 25-28°C until they are transferred to the grower.

Typically the grower receives the plugs with the plants when the plants have reached a desired length from the initial growth phase, and transfers them into growth containers, e.g. conventional 12 - 15 cm containers, filled with growth substrate. At that time, the plants typically have at least 2 to 3 leafs. It is important to check various parameters during growth, including depth of the plug in the container's substrate and substrate compression. Current growth substrates for instance include bark with Sphagnum and bark combined with cocochips (15-50 weight-%).

The next phase is the selection of the larger and smaller plants. Most of the growers are selecting 2 sizes, a few will have 3 sizes.

The cultivation under the responsibility of the grower in the case of Phalaenopsis can be divided in 3 periods: (i) young plant growing (growing periods 1 and 2), (ii) cooling period and (iii) final growing until the adult plant is obtained. The cooling period occurs when the plant has 4 to 5 leafs with a minimum length of 10 to 15 cm. The cooling period can be realized during the whole year and is not seasonal in Western Europe.

Typical temperatures and durations for each period are indicated below:

| | | |
|---|---|---|
| Growing period 1 | 27-30°C | 16-18 weeks |
| Growing period 2 | 27-30°C | 8-10 weeks |
| Cooling period | 17-22°C | 6-8 weeks |
| Final growing | 19-24°C | 10-14 weeks |

It would be desirable and thus it is an object to provide a plant growth system which allows better root and shoot or spike development and a better quality and thus value of the plant, and/or which can lead to a harvestable and/or salable plant in a shorter period of time as compared to the current plant growth systems. Moreover, it would be desirable to provide a plant growth system which better addresses individual demands of plants than existing plant growth systems.

This problem is solved by the subject matter of claims 1, 10 and 12-15. Preferred embodiments are set forth in respective subclaims.

In particular, the present invention provides, as set forth in the following items, various aspects, subject-matters and preferred embodiments, which respectively taken alone or in combination, contribute to solving the object of the present invention as well as further objects:
1. A plant growth system comprising:
   (a) a container having a top opening and an inner volume;
   (b) a receiving structure inside the inner volume of the container, wherein said receiving structure is form-stable, and comprises or essentially consists of mineral wool, preferably stone wool;
   (c) a plant receiving portion formed by the receiving structure for receiving a plant or a plug comprising a plant through the top opening of the container into said plant receiving portion and holding it in place; and
   (d) one or more volume space(s) free of the mineral wool comprised in the receiving structure (b), preferably free of mineral wool in general.
2. The plant growth system according to item 1, wherein the one or more volume space(s) free of mineral wool occupy the remaining space of the inner volume of the container not being occupied by the receiving structure and the plant receiving portion.
3. The plant growth system according to item 1 or 2, wherein the one or more volume space(s) free of mineral wool are air space(s).
4. The plant growth system according to anyone of items 1 to 3, wherein the one or more volume space(s) free of the mineral wool of (b) are occupied or partly occupied by non-mineral wool substrate(s) or mineral wool substrate(s) different from the mineral wool comprised in the receiving structure, wherein the mineral wool substrate(s) preferably differs from the mineral wool comprised in the receiving structure by being non-fixed, loose material.
5. The plant growth system according to anyone of items 1 to 4, wherein the one or more volume space(s) free of mineral wool are partly occupied by non-mineral wool substrate(s) and partly form air spaces.
6. The plant growth system according to any one of the preceding items 2 to 5, wherein the non-mineral wool substrate(s) fully or partly filling the one or more volume space(s) are selected from the group consisting of expanded clay, bark, perlite, lavastones, cocopeat cocochips, woodfibers, white peat, brown peat, peat fractions, blackpeat, cork, compost, clay, pebbles, foam and combinations thereof.
7. The plant growth system according to any one of the preceding items, wherein the plant receiving portion is in communication with an inner surface of the container, preferably is in communication with a substantial or a whole portion of the inner surface of the container, through the one or more volume space(s) free of mineral wool.
8. The plant growth system according to any one of the preceding items, wherein the one or more volume space(s) free of mineral wool extend through the receiving structure towards a side wall and/or bottom of the container.
9. The plant growth system according to any one of the preceding items, wherein at least three, preferably at least four, volume spaces free of mineral wool extend through the receiving structure towards a side wall and/or bottom of the container.
10. The plant growth system according to any one of the preceding items, wherein the receiving structure is built by one piece, or by at least two separate partial structures, to thereby form the plant receiving portion and the one or more volume spaces.
11. The plant growth system according to any one of the preceding items, wherein the receiving structure is selected from |_|-, \_/- ,U-, H-, V-, X-, Y- and ring-shaped structures, or wherein the receiving structure is built by at least two separate partial structures, wherein the partial structures are selected from |_|-, \_/-, U-, H-, V-, X-, Y- and ring-shaped structures.
12. The plant growth system according to any one of the preceding items, wherein the receiving structure is built by a first partial structure being |_|-, \_/- , U-, V- or X- and preferably |_|- or \_/-shaped, and a second partial structure being H- or X- and preferably H-shaped, wherein preferably the first and second partial structures are arranged essentially rectangular to each other.
13. The plant growth system according to any one of the preceding items, wherein the receiving structure comprises at least two ring-shaped partial structures and optionally spacer structures (7) arranged between the at least two ring-shaped partial structures, wherein the structure is built from one piece or at least two separate partial structures.
14. The plant growth system according to any one of the preceding items, wherein the one or more volume space(s) free of mineral wool amount to at least 5 % and/or at most 90 %, preferably 5 - 50 %, more preferably 10 - 50 %, even more preferably 20 - 40 %, in particular 25 - 35 % relative to the total inner volume of the container.
15. The plant growth system according to any one of the preceding items, wherein the receiving structure occupies a volume in the range of 10 - 95 %, preferably 40 - 90 % and more preferably 50 - 80 %, relative to the total inner volume of the container.
16. The plant growth system according to any one of the preceding items, wherein the receiving structure is in contact with and preferably fits closely into the inner volume of the container, except at inner volume portions where the one or more volume space(s) free of mineral wool are provided.
17. The plant growth system according to any one of the preceding items, wherein the receiving structure comprises ridges allowing circumferential root growth along an inner surface of the container.
18. The plant growth system according to any one of the preceding items, wherein the receiving structure comprises one or more open channels, other than pores present in mineral wool, promoting plant growth through the channel(s); preferably said open channels are free of mineral wool.
19. The plant growth system according to any one of the preceding items, wherein the receiving structure is made by forming binder-fixed mineral wool into a defined shape, wherein the binder is preferably an organic binder and wherein the binder is more preferably free of acrylic and/or free of dyes.
20. The plant growth system according to item 19,
   wherein the binder is selected from the group consisting of formaldehyde based binder, urea based binder, melamine based binder and bio-based binder, wherein the binder is preferably free of acrylic and/or free of dyes.
21. The plant growth system according to any one of the preceding items, further comprising a plant or a plug containing a plant.
22. The plant growth system according to any one of the preceding items, wherein the plant or the plug containing a plant comprises a plant growth substrate selected from the group consisting of peat related products, cocopeat related products, woodfibre, sand, soil, foam, mineral wool and glasswool.
23. The plant growth system according to any one of the preceding items, wherein the plant receiving portion (in particular when embodied as plug) has a volume in the range of 1 to 30 %; preferably 2 to 20 %; more preferably 5 to 15 % relative to the total inner volume of the container.
24. The plant growth system according to any one of the preceding items, wherein the plant receiving portion (in particular when embodied as plug) is in contact with and preferably fits closely into the receiving structure, except at portions where the one or more volume space(s) free of mineral wool are provided.
25. The plant growth system according to any one of the preceding items, wherein the plant receiving portion (in particular when embodied as plug) has a cylindrical, conical, cubic or cuboid shape, preferably a frustoconical shape with the wider end at the top surface in use.
26. The plant growth system according to any one of the preceding items, wherein the plant is selected from the group consisting of adult plants, young adult plants, seedlings, cuttings and seeds.
27. The plant growth system according to any one of the preceding items, wherein the plant is selected from the group consisting of pot plants.
28. The plant growth system according to item 27, wherein the pot plant is selected from the group consisting of flowering plants, ornamental plants, house plants, cacti, palm trees, tree nursery plants, soft fruit plants, vegetables and herbs, preferably flowering plants.
29. The plant growth system according to item 27 or 28, wherein the pot plant is selected from the group consisting of Rosales (preferably Cannabaceae, in particular Cannabis), epiphytes, bromeliads, calatheaes, dracaenas, fici, perperomia, spider plants, Chlorophytum comosum, Aloe vera, Spathiphyllum wallisii, Crassula ovata, Saintpaulia, Ficus benjamina, Peperomia, Strelitzia reginae, Aphelandra squarrosa, Cyclamen Persicum, Capsicum annuum, Stephanotis floribunda, Gerbera jamesonii, Primula obconica, Calathea crocata, Cattleya orchid, Paphiopedilum, Anthuriums and Begonia coccinea, preferably epiphytes, more preferably orchids and in particular Phalaenopsis.
30. The plant growth system according to item 27 or 28, wherein the pot plant is a plant having aerial roots.
31. The plant growth system according to any one of the preceding items, wherein the container comprises one or more draining holes at the bottom of the container.
32. The plant growth system according to any one of the preceding items, wherein the container has a cylindrical, conical, cubic or cuboid shape, preferably a frustoconical shape with the wider end towards the top opening of the container.
33. The plant growth system according to any one of the preceding items, wherein the container has a total inner volume in the range of 0.1-50 L, preferably 0.1-20 L, more preferably 0.1-10 L, most preferably 0.1-1 L and in particular 0.2-0.5L.
34. The plant growth system according to any one of the preceding items, wherein the top opening extends essentially across the whole top surface of the container.
35. The plant growth system according to any one of the preceding items, wherein the container is a plant pot, wherein the plant pot preferably comprises or essentially consists of plastic (in particular polypropylene) or ceramics, wherein in the case of orchid cultivation the plastic is preferably a transparent plastic.
36. The plant growth system according to item 35, wherein the plant pot is square, round, deep and/or tapered.
37. A receiving structure for growing a plant, wherein said receiving structure is form-stable, and comprises mineral wool, preferably essentially consisting of coherent mineral wool, wherein the receiving structure forms a plant receiving portion for receiving a plant or a plug comprising a plant and holding it in place, wherein the plant receiving portion communicates via one or more volume space(s) free of mineral wool, other than the volume defined by the plant receiving structure, with the outside of the receiving structure.
38. The receiving structure according to item 37, wherein the one or more volume space(s) free of mineral wool extend through the receiving structure at a location other than where the plug is to be introduced.
39. The receiving structure according to item 37 or 38, wherein the one or more volume space(s) free of mineral wool extend through the side wall and/or bottom of the receiving structure.
40. The receiving structure according to any one of the preceding items 37 to 39, wherein at least three, preferably at least four, volume spaces free of mineral wool are oriented towards and/or extending through one or more side walls and/or the bottom of the receiving structure.
41. The receiving structure according to any one of the preceding items 37 to 40, wherein the receiving structure is built from a single piece or by at least two separate partial structures to thereby form the plant receiving portion and the one or more volume spaces.
42. The receiving structure according to any one of the preceding items 37 to 41, wherein the receiving structure is selected from |_|-, \_/- ,U-, H-, V-, X-, Y- and ring-shaped structures, or wherein the receiving structure is built by at least two separate partial structures, wherein the partial structures are selected from |_|-, \_/-, U-, H-, V-, X-, Y- and ring-shaped structures.
43. The receiving structure according to any one of the preceding items 37 to 42, wherein the receiving structure is built by a first partial structure being |_|-, \_/- , U-, V- or X- and preferably |_|- or \_/-shaped, and a second partial structure being H- or X- and preferably H-shaped, wherein preferably the first and second partial structures are arranged essentially rectangular to each other, or wherein such structure is built from a single piece.
44. The receiving structure according to any one of the preceding items 37 to 43, wherein the receiving structure is built by at least two ring-shaped partial structures and optionally spacer structures arranged between the at least two ring-shaped partial structures, or wherein such structure is built from a single piece.
45. The receiving structure according to any one of the preceding items 37 to 44, wherein the receiving structure comprises ridges on its outer surface.
46. The receiving structure according to any one of the preceding items 37 to 45, wherein the receiving structure comprises one or more open channels, other than pores present in mineral wool and other than the volume defined by the plant receiving structure.
47. The receiving structure according to any one of the preceding items 37 to 46, wherein the receiving structure is made by forming binder-fixed mineral wool into a defined shape, wherein the binder is preferably an organic binder.
48. The receiving structure according to item 47, wherein the binder is selected from the group consisting of formaldehyde based binder, urea based binder, melamine based binder and bio-based binder, wherein the binder is preferably free of acrylic and/or free of dyes.
49. The receiving structure according to any one of the preceding items 37 to 48, wherein the plant receiving portion (especially when embodied as plug) has a cylindrical, conical, cubic or cuboid shape, preferably a frustoconical shape with the wider end at the top surface in use.
50. The receiving structure according to any one of the preceding items 37 to 49, wherein the receiving structure, when inserted into a container having a top opening, and optionally when receiving a plant or a plug comprising a plant, is as defined as in any one of items 1 to 36.
51. A method for setting up a plant growth system comprising positioning a plant or a plug comprising a plant into a receiving structure contained inside a container, wherein the plant or plug, receiving structure and container are as defined in any one of preceding items 1 to 36.
52. A method for growing a plant comprising providing a plant growth system as defined in any one of preceding items 1 to 36, optionally introducing a plant or a plug comprising a plant into the plant receiving portion, and allowing the plant to grow.
53. The method for growing a plant according to item 52, further comprising positioning the plant in the form of a seed, seedling or a cutting in or on the plant receiving portion and allowing the plant to root and grow, or positioning the plant in the form of a seed, seedling or a cutting in or on the plug, allowing the plant to root and grow, then transferring the plug along with the plant for introduction into the plant receiving portion.
54. A method for protecting plants from attack or infestation by a nematode worms selected from the group consisting of Keroplatidae, in particular Lyprauta spp., comprising providing a plant growth system as defined in any one of preceding items 1 to 36 and allowing the plant, preferably selected from the group consisting of orchids, to grow.
55. Use of a plant growth system as defined in any one of preceding items 1 to 36 or a receiving structure as defined in any one of preceding items 37 to 50
   (i) for improving growth of a plant and/or protecting the plant from attack or infestation by a nematode worms selected from the group consisting of Keroplatidae and in particular Lyprauta spp.; and/or
   (ii) as a substitute for natural organic substrate and particularly as a substitute for fossil-based substrates, wherein the plant is preferably selected from the group consisting of epiphytes, more preferably orchids and in particular Phalaenopsis.
56. Use of binder-fixed and form-stable mineral wool in a pot plant container for controlling and/or protecting a plant from attack or infestation by a nematode selected from the group consisting of Keroplatidae and in particular Lyprauta spp..
57. Use of a binder-fixed and form-stable mineral wool in a pot plant container for increasing the average total leaf length of a Phalaenopsis plant, in particular an orchid, after a propagation period from plugging of 12 weeks, relative to a reference plant growth system; and/or wherein the average total leaf length is from 10 to 60 cm, preferably at least 45 cm and more preferably at least 50 cm for Phalaenopsis york or Phalaenopsis zamora, and/or at least 10 cm, preferably 11 cm, more preferably at least 12 cm for mini multiflora Phalaenopsis plants.
58. The plant growth system as defined in any one of preceding items 1 to 36 or a receiving structure as defined in any one of preceding items 37 to 50, which respectively includes a single plant receiving portion only.
58. The plant growth system as defined in any one of preceding items 1 to 36 or a receiving structure as defined in any one of preceding items 37 to 50, wherein the plant receiving portion is located in the radial center of a cross-section of the plant growth system or the receiving structure.

The subject matter of the herein disclosed items are meant to reflect (further) aspects and/or embodiments of the invention and/or be combinable with the following aspects of the present invention and the various embodiments thereof.

In a first aspect, the present invention relates to a plant growth system comprising:
(a) a container having a top opening and an inner volume;
(b) a receiving structure inside the inner volume of the container, wherein said receiving structure is form-stable, and comprises or essentially consists of mineral wool, preferably coherent mineral wool;
(c) a plant receiving portion formed by the receiving structure for receiving a plant or a plug comprising a plant through the top opening of the container into said plant receiving portion and holding it in place; and
(d) one or more volume space(s) free of the mineral wool comprised in the receiving structure and preferably free of mineral wool generally.

Surprisingly, the existence of one or more volume space(s) free of the mineral wool comprised in the receiving structure and preferably free of mineral wool generally (if not specified otherwise herein, in the whole specification, also collectively referred to as "one or more volume space(s) free of mineral wool" with respect to (d)), in combination with a form-stable mineral wool-comprising volume space (structural compartment) formed inside the inner volume of the container, allows plants to grow faster as compared to the same plant grown in a reference plant growth system whose container is generally completely occupied by substrate and does not comprise such specifically selected volume space(s). It had to be expected that conventional and typically optimized substrates for the plant, in particular potted plant, more particular potted flower plant and even more in the case of a Phalaenopsis plant, would provide better growth system for the given plant.
Without being bound by any theory it is thought that the aforementioned, selected volume space(s) provide a structural form which mimics nature and hence assist rooting. As a result, less days of cultivation in the green house is required and there is less time to wait before the plant is ready for sale. Moreover, it was indicated the larger the leaf surface, the higher the number of leafs and flowers and, hence, the higher the quality of the grown plant. Since much effort was put in the past to optimize plant growth systems according to individual needs of a plant, such as e.g. Phalaenopsis, and this optimized plant growth system was used as a comparison, the inventors' finding is surprising and entirely unexpected.

In addition, the one or more volume space(s) free of mineral wool facilitate easy rooting into said volume space(s) and allow the roots to firmly "grab" along a part of the receiving structure forming the interface towards the mineral wool-free volume space(s). This effect is most pronounced in case the one or more volume space(s) free of mineral wool are air space(s) or occupied by a pourable and/or particulate substrate, preferably air space(s).

A further surprising advantage associated with the present invention is the observation that infestation by potworm (nematode selected from the group consisting of Keroplatidae, in particular Lyprauta spp.) could be prevented during entire growth by the use of a binder-fixed and form-stable mineral wool. The potworm control by a form-stable mineral wool may be used in the plant growth system of the invention as specified herein, but for exerting this new effect the form-stable mineral wool does not need to have a certain receiving structure (or a certain shape thereof), and does not need to be combined with a plant receiving portion and mineral wool-free space(s) comprised in a container. It is thought that this effect was found during plant cultivation due to two characteristics of the mineral wool structure exerted in combination, which are thought not to form a favorable environment for potworms: the basically inorganic nature thereof as well as the coherent nature thereof when it is binder-fixed and form-stable and thus is absent of relatively large pores accessible to potworm movement, i.e. pores other than the normal pores of the mineral wool having its normal density, specifically density ranges described herein. The problems of nematode infestation are enormous. The turnover of grown Phalaenopsis in Holland is approximately 550 Mio Euro, and the damage caused by the nematode amounts to about 10 % of the turnover. Hence, there is keen interest in the art how to prevent damage resulting from said nematodes, which avoids the use of pesticides, which are generally unwanted and only limitedly allowed.

Besides the explicitly described advantages, further advantages will become apparent from the description of the invention.

The receiving structure has an outer shape comprising one or more outer corner(s), edge(s) and/or surface(s), which when being connected by line(s) and/or surface(s) describe a geometric body which preferably substantially or completely conforms to the inner shape of the container. In this case, the receiving structure is effectively held in place by the container itself. Preferably, the receiving structure has a shape so that the receiving structure's highest point conforms to the actual or recommended filling height of the container used, wherein optionally only a small gap between the receiving structure's highest point and the container's top opening level may be left to be filled by a natural substrate material, such small gap only serving and dimensioned for optical reasons for the customer to appear as a natural product and accordingly being dimensioned only to about 0,5 cm to 3 cm, preferably only 1 to 2 cm in height. In case the receiving structure extends until the bottom of the container, the receiving structure's lowest and highest points preferably define a distance which approximately conforms to the actual or recommended filling height of the specific container used, at most and only optionally forming a small gap between the receiving structure's highest point and the container's top opening level serving as a natural substrate filling. When the aforementioned gap(s) is/are optionally present, its/their volume is/are calculated as belonging to the one or more volume space(s) free of mineral wool (d).

Indications of (relative) directions and locations such as top and bottom as well as outer and inner are to be understood in the specific context and in particular in the context of normal use of the herein disclosed subject matter. Generally, "top" denotes a more distant location from the geocenter than "bottom" and "outer" means a more distant location from the center of a line, surface or geometric body than "inner". More specifically, the direction "bottom" towards "top" defines the growth direction of the plants to be grown using means and methods of the present invention.

The term "inner volume of the container" is meant to define the recommended filling volume of the container ± 20 vol.-%. In specific cases, the recommended filling volume corresponds to the volume of a growth substrate which the container can accept without losing it during normal use ± 20 vol.-%.

The term "plant receiving portion" denotes a free volume space formed by the receiving structure reserved for the plant or the plug comprising the plant and occupied by the plant or the plug comprising the plant when it has been introduced into the receiving structure. In case a plug is used, the plant receiving portion is open towards the top and formed and stabilized by the receiving structure itself, and particularly by its form-stable nature, and does not require introduction of a geometric body such as a plug for its formation.

The term "form-stable" in the context of the receiving-structure means that the receiving structure and in particular the part of the receiving structure forming the partitioning of the plant receiving portion and/or the one or more volume space(s) free of mineral wool substantially maintains its shape during use and in particular independent on whether or not a geometric body such as a plug is introduced and/or the one or more volume space(s) free of mineral wool are occupied by non-mineral wool substrate. In this context, "use" includes providing the plant growth system of the invention, introducing the plant or the plug comprising the plant into the plant receiving portion and, preferably, growing the plant over a period of at least 12 weeks.

A form-stable receiving structure useful in the context of the present invention can be made by forming binder-fixed mineral wool into a defined shape. It is therefore preferred that the binder-fixed mineral wool is a coherent matrix of mineral fibers connected by cured binder.

The binder is preferably an organic, more preferably an organic, hydrophobic binder. Preferably, the binder is heat-curable (thermosetting). Specific examples are selected from the group of phenol formaldehyde resin and urea formaldehyde resin, in particular phenol urea formaldehyde (PUF) resin. It can also be a formaldehyde free binder such as a polyacrylic acid based binder or an epoxy based binder. The most preferred binder is selected from the group consisting of formaldehyde based binder, urea based binder, melamine based binder and bio-based binder, wherein the binder is preferably free of acrylic and/or free of dyes. The term "bio-based binder" means that the binder is based on fast renewable sources.

The binder is preferably present in the binder-fixed mineral wool in amounts of from 0.1 to 10% based on the substrate, usually 0.5 to 5%, most preferably 1.5 to 5%.

The mineral wool may or may not comprise a wetting agent. A suitable wetting agent in the context of the present invention is a non-ionic surfactant. Alternatively it can be an ionic surfactant, preferably an anionic surfactant. The wetting agent may be present in the mineral wool in amounts preferably from 0.01 to 3% (by weight), more preferably 0.05 to 1 %, in particular, 0.075 to 0.5%, relative to the total weight of the mineral wool.

The mineral wool may contain other types of additives in addition to the binder and wetting agent, for instance salts such as ammonium sulfate and adhesion promoters such as silanes.

The density of the mineral wool to be used for the receiving structure can generally be at least 20 kg/m³ and/or up to 200 kg/m³, but is preferably in the range of 40 to 180 kg/m³, more preferably in the range of 50 to 150 kg/m³ and most preferably in the range of 60 to 140 kg/m³.

The mineral wool is a man-made vitreous fiber material. Preferably, the mineral wool is stone wool (also known as rock wool) for improved growth enhancement. The mineral wool can be made from natural resources, for example by pouring the melt on the rotating wheels to form stone wool. During fiberization several additives, such as dust suppressing agents and binders (urea, epoxy and formaldehyde resin, bitumen, etc.), may be used. Additives may represent 25 weight-% of the final product. The mineral wool can be manufactured to many different densities to give varying properties and formed into shapes. Fiber diameter is typically in the range 3 to 20 microns, in particular 5 to 10 microns.

The stone wool preferably has a content of iron oxide at least 3% and alkaline earth metals (calcium oxide and magnesium oxide) from 10 to 40%, along with the other usual oxide constituents of mineral wool. These are silica, alumina, alkali metals (sodium oxide and potassium oxide), usually in low amounts and can also include titania and other minor oxides.

The form-stable, coherent mineral wool receiving structure may have predominant fiber orientation. Generally, the fibers may be arranged predominantly in the vertical direction or predominantly in the horizontal direction.

It is generally preferred that the container comprises only one plant or only one plug comprising one plant. Thus, the receiving structure preferably forms only one plant receiving portion, where only one plant or plug can be introduced, the one plug preferably comprising only one plant. The one plant or the one plug comprising a plant is preferably located in the radial center of a cross-section of the container, or of the plant receiving portion, respectively.

In a preferred embodiment, the one or more volume space(s) free of mineral wool, which occupy the remaining space of the inner volume of the container not being occupied by the receiving structure and the plant receiving portion, are air space(s). This embodiment is particularly beneficial for cultivating plants having aerial roots. Aerial roots means that the selected plant in its natural environment develops roots above the ground. Aerial roots are found in diverse plant species, including epiphytes such as orchids, tropical coastal swamp trees such as mangroves, the resourceful banyan trees, the warm-temperate rainforest ra̅ta̅ (Metrosideros robusta) and po̅hutukawa (M. excelsa) trees of New Zealand and vines such as Common Ivy (Hedera helix) and poison ivy. Surprisingly, the one or more volume space(s) being air space(s) form a pleasant environment for aerial roots although they are not (necessarily) located above the ground. A further advantage of the one or more volume space(s) free of mineral wool being air space(s) is due to the fact that substrate and hence costs can be saved.

In another preferred embodiment, the one or more volume space(s) free of mineral wool, which occupy the remaining space of the inner volume of the container not being occupied by the receiving structure and the plant receiving portion, are occupied by non-mineral wool substrate(s). The term "substrate(s)" herein denotes a growing medium, i.e. a material which allows the plants to grow therein and/or thereon. As outlined above, in certain cases it is especially advantageous for the non-mineral wool substrate(s) to be pourable and/or particulate.

In another embodiment, the one or more volume space(s) free of mineral wool, which occupy the remaining space of the inner volume of the container not being occupied by the receiving structure and the plant receiving portion, are occupied by mineral wool substrate(s) different from the mineral wool comprised in the receiving structure. Preferably, the mineral wool substrate(s) occupying the one or more volume space(s) free of mineral wool is a non-contiguous and loose material and preferably not form-stable.

In a further embodiments, the one or more volume space(s) free of mineral wool are partly occupied by non-mineral wool substrate(s) and partly form air spaces. This embodiment advantageously allows for efficiently meeting individual demands of the plant to be grown, in particular when the relative proportions of non-mineral wool substrate(s) and air space(s) are balanced against each other in accordance to said specific demands.

The non-mineral wool substrate(s) fully or partly filling the one or more volume space(s) is preferebly selected from the group consisting of expanded clay (preferably in the form of pebbles), bark, perlite, lavastone (and fractions thereof), cocopeat cocochips, woodfibers, white peat, brown peat, peat fractions, blackpeat, glasswool (combined with stone wool used for the receiving structure), and combinations thereof.

Preferably, the plant receiving portion is in communication with an inner surface of the container through the one or more volume space(s) free of mineral wool. A possible and preferred solution of obtaining communication is achieved by a plant growth system of the invention, wherein the one or more volume space(s) free of mineral wool extend through the receiving structure towards and until a side wall and/or bottom of the container.

According to a preferred embodiment, the plant growth system of the invention comprises at least one, two or three, preferably at least four, volume spaces free of mineral wool extending through the receiving structure towards, and preferably until, a side wall and/or bottom of the container.

As will be understood by the skilled person, the receiving structure can adopt a large number of different shapes to meet the herein described functional and/or structural requirements. The form-stable shape of the receiving structure is thus not limited to certain shapes. Preferred shapes allow an advantageous volume proportion of the mineral wool containing receiving structural occupation of the inner volume on the one hand and the mineral wool-free volume space(s), and are easier and/or cheaper to manufacture such as by using automatized mass fabrication, and primarily for this reason the following shapes and assemblies are particularly advantageous.
(i) |_|-, \_/-, U-, H-, V-, X-, Y- and ring-shaped structures or the like structures
   These structures can be simply cut out from a planar mineral wool mat, preferably having a thickness of at least 5 mm and preferably of at most 2500 mm, preferably in the range of 5 - 100mm, more preferably 10 - 45 mm, still more preferably 15 - 40 mm and in particular 25 - 35 mm. Accordingly, these receiving structure have an essentially planar shape having a thickness corresponding to the aforementioned thickness of the mat.
(ii) A three dimensional body formed by at least two separate partial structures.
   In this case, the receiving structure can both be easy fabricated as described in the context of (i) and firmly hold in place in the intended orientation by the container. Moreover, it allows for easy formation of the plant receiving portion and the one or more volume space(s) upon assembly of the separate partial structures and stabilization of the plug in the intended orientation.
   In one embodiment, the partial structures are selected from |_|-, \_/-, U-, H-, V-, X-, Y- and ring-shaped structures or the like structures. Evidently, a |_|-, \_/-, U- or V-(or |_|-, \_/-, U- or V--like) shaped partial structure can easily engage, and preferably can interlock, with an H-, X- or Y- (or H-, X- or Y-like) shaped partial structure twisted along the longitudinal axis by some degrees in the range of 10 to 90°, preferably 30 to 90°, more preferably 45 to 90° and most preferably 60 to 90°. Hence, these combinations and in particular a combination formed by a |_|- or \_/(or |_|- or \_/-like) shaped partial structure and a H-shaped partial structure constitute particularly preferred embodiments of the invention.
   In another embodiment, a three dimensional body is built by at least two ring-shaped partial structures. The partial structures can be directly assembled in the container by introducing the at least two ring-shaped partial structures oriented in the horizontal plane into the container. Optionally, spacer structures are arranged in between the at least two ring-shaped partial structures. A preferred embodiment makes us of two, three or four ring-shaped partial structures which are preferably spaced apart by spacer structures located in between each of the two, three or four ring-shaped partial structures. The spacers may be made of the same material as the receiving structure or a different one.
(iii) A three dimensional body formed by only one piece
   Notably, solution (ii) requires a step of assembling the at least two partial structures. In specific cases, it can therefore be preferred to directly form from scratch a three dimensional body having essentially the same shapes as described, or cut said three dimensional body from a single piece of mineral wool block.

The total volume of the one or more volume space(s) free of mineral wool depends on the plant to be grown. Generally, it can amount to at least 5 % and/or at most 90 %, preferably 5 - 50 %, more preferably 10 - 50 %, even more preferably 20 - 40 %, in particular 25 - 35 % relative to the total inner volume of the container. For instance in the case of orchid or Phalaenopsis plants, it has been found that particularly good results are obtained when the total volume of the one or more volume space(s) free of mineral wool amount to 25 - 35 % relative to the total inner volume of the container.

With regard to the volume occupied by the receiving structure, useful values are in the range of 40 - 95 %, preferably 40 - 90 %, more preferably 50 - 80 %, even more preferably 60 -75 %, relative to the total inner volume of the container.

In a particularly preferred embodiment, the receiving structure comprises ridges allowing circumferential root growth along the inner surface of the container. Rooting is guided by the ridges and is thus efficiently restricted to occur between the inner (side or bottom) surface of the container and the outer (side or bottom) surface of the receiving structure, i.e. the roots remain inside the plant growth system and do not intertwine with other plant's roots.

In a specific embodiment, the plant growth system further comprises a plant or a plug comprising a plant. This plug corresponds to the plug already described in the above context and in particular in the context of the plant receiving portion.
At the interface towards the plant receiving portion, respectively bottom and/or side surface of the plant or the plug comprising the plant, the receiving structure comprises one or more outer corner(s), edge(s) and/or surface(s), which when being connected by line(s) and/or surface(s) describe a surface which preferably corresponds to the shape of the plant or the plug.

In order to provide support for the plug, it is preferred that the plug is in contact with and preferably fits closely into the receiving structure, except at portions where the one or more volume space(s) free of mineral wool are provided. In a preferred embodiment, the plug has an essentially cylindrically or conical shape, preferably a frustoconical shape with the wider end oriented upwards, i.e. in growth direction of the plant.

From the point of view of the plant receiving portion, the receiving structure can be described to comprise at the interface towards the plant receiving portion, respectively bottom and/or side surface of the plug, one or more outer corner(s), edge(s) and/or surface(s), which when being connected by line(s) and/or surface(s) describe a surface which preferably corresponds to the shape of the plant or the plug, in particular both in terms of shape and size (± 20 %). For example, if the plug has an essentially cylindrically or conical shape, preferably a frustoconical shape with the wider end oriented upwards, then the one or more outer corner(s), edge(s) and/or surface(s) at the interface towards the plant receiving portion, respectively bottom and/or side surface of the plug, when being connected by line(s) and/or surface(s) describe an essentially cylindrically- or conically-shaped surface, preferably a frustoconically-shaped surface with the wider end oriented upwards.

The plug comprises a plant growth substrate, preferably a plant growth substrate selected from the group consisting of peat-related products, bark, foam, cocopeat-related products, woodfibre, sand, soil, mineral wool such as stone wool and glass wool.

The plug has preferably a volume in the range of 1 to 30 %, preferably 2 to 20 % and more preferably 5 to 15 % relative to the total inner volume of the container.

In terms of size, the plug can have a height in the range of 1 - 90 % (preferably 2 - 70 %, more preferably 5 - 60 %, most preferably 10 - 50 %) relative to the inner height of the container and/or an axial diameter or axial length in the range of 1 - 50 % (preferably 2 - 45 %, more preferably 5 - 40 %, most preferably 10 - 30 %) relative to the inner axial diameter (or axial length) of the container measured at the widest distance (typically at the top open end of the container).

Due to the possibility to adapt the number and/or total volume occupied by the one or more volume space(s) free of mineral wool relative to the inner volume of the container and/or relative to the volume occupied by the receiving structure, it is possible to provide plant growth systems of the invention which can easily adapt to specific needs of plants. The advantages associated with the present invention are therefore generally not restricted to plants from a specific order, family or genus. However, it will be readily understood that the present invention is particularly useful for the cultivation of potted plants, preferably a pot plant selected from the group consisting of flowering plants, ornamental plants, house plants, cacti or palm trees, tree nursery plants, vegetables, soft fruit or berry plants, herbs, and preferably from the group consisting of flowering plants.

In specific embodiments, the pot plant is selected from the group consisting of epiphytes, Rosales (preferably Cannabaceae, in particular Cannabis), bromeliads, calatheaes, dracaenas, fici, perperomia, spider plants, Chlorophytum comosum, Aloe vera, Spathiphyllum wallisii, Crassula ovata, Saintpaulia, Ficus benjamina, Peperomia, Strelitzia reginae, Aphelandra squarrosa, Phalaenopsis, Cyclamen Persicum, Capsicum annuum, Stephanotis floribunda, Gerbera jamesonii, Primula obconica, Calathea crocata, Cattleya orchid, Paphiopedilum, Begonia coccinea and Anthuriums. Particularly good results are obtained with the present invention if the pot plant is selected from the group consisting of epiphytes, more preferably orchids and in particular Phalaenopsis. Thus, these pot plants are particularly preferred.

Turning to the specifications of the container, it is common to provide it with one or more draining holes at the bottom of the container, in particular when the plant to be grown does not like stagnant water such as orchids and in particular Phalaenopsis plants. Further preferred container specifications are described in the items.

A further aspect of the present invention is a receiving structure for growing a plant, wherein said receiving structure is form-stable, and comprises or essentially consists of mineral wool, preferably coherent mineral wool, wherein the receiving structure forms a plant receiving portion for receiving a plant or a plug comprising a plant and holding it in place, wherein the plant receiving portion communicates via one or more volume space(s) free of mineral wool, other than the volume defined by the plant receiving structure, with the outside of the receiving structure.

The one or more volume space(s) free of mineral wool preferably extend through the receiving structure at a location other than where the plug is to be introduced, preferably through the side wall and/or bottom of the receiving structure. Generally, it is possible to have only one volume space free of mineral wool, e.g. oriented towards and/or extending through a side wall or the bottom. It is however preferred to have at least two, preferably at least three and more preferably at least four volume spaces free of mineral wool, e.g. oriented towards and/or extending through one or more side walls and/or the bottom of the receiving structure of the invention.

Further preferred embodiments of the receiving structure of the invention are described in the items and further specified and/or explained in the context of the disclosure of the plant growth system of the invention. As far as the disclosure, in particular definitions, explanations and embodiments given in the context of the plant growth system of the invention, relate to the receiving structure, these definitions, explanations and embodiments, either alone or in combination with other definitions, explanations and embodiments, preferably also apply in the case of the receiving structure of the invention.

Similarly, as far as the disclosure, in particular definitions, explanations and embodiments given in the context of the plant growth system of the invention and/or the receiving structure of the invention, relate to a plant or a plug comprising a plant, a receiving structure and/or a container, these definitions, explanations and embodiments, either alone or in combination with other definitions, explanations and embodiments, preferably also apply in the case of methods and uses of the invention. These methods and uses are described in the following.

Another aspect of the present invention is a method for setting up a plant growth system. The method comprises positioning a plant or a plug comprising a plant into a receiving structure contained inside a container, wherein the plant or the plug comprising the plant, the receiving structure and the container are as described herein in the context of the plant growth system of the invention and/or the receiving structure of the invention. Preferably the plant is selected from the group consisting of orchids and in particular Phalaenopsis.

A further aspect of the present invention is an (improved) method for growing a plant. The method comprises providing a plant growth system of the present invention, if necessary introducing a plant or a plug comprising a plant into the plant receiving portion, and allowing the plant to grow. In one embodiment, the method, prior to introduction of the plug comprising the plant, comprises the steps of positioning a plant in the form of a seed, seedling or a cutting in or on a plug, allowing the plant to root and grow, and then providing the plug for introducing into the plant receiving portion. Preferably the plant is selected from the group consisting of orchids and in particular Phalaenopsis. Typically, the plants are allowed to grow until they can be harvested and/or offered for sale. Alternatively, the can be allowed to grow until a desired size is reached and then be transferred to another growth substrate for further growing. The actual duration depends on the specific plant to be grown. For Phalaenopsis, the duration is indicated in the introduction, which indications also apply in the context of the present invention.

An even further aspect of the present invention is a method for protecting plants from attack or infestation by a nematode selected from the group consisting of Keroplatidae and preferably Lyprauta spp. (also known as potworm). The method comprises providing a plant growth system of the invention and allowing the plant, preferably a plant selected from the group consisting of orchids and in particular Phalaenopsis, to grow.

Other aspects of the present invention relate to various uses as described herein, and in particular in the following.

Accordingly, the present invention is directed to use of a plant growth system according to the present invention, or a receiving structure according to the present invention, for improving growth of a plant and/or protecting a plant from attack or infestation by a nematode selected from the group consisting of Keroplatidae and preferably Lyprauta spp. and/or as a substitute for natural organic substrate and particularly as a substitute for fossil-based substrates. The plant is preferably selected from the group consisting of epiphytes (preferably orchids and in particular phalaenopsis) and Rosales (preferably Cannabaceae, in particular Cannabis).

The present invention also relates to use of binder-fixed and form-stable mineral wool in a pot plant container for controlling and/or protecting a plant from attack or infestation by a potworm. As outlined above, it is not necessary for pot worm control that the binder-fixed and form-stable mineral wool has a specific shape and/or structure, and therefore there is no restriction in this regard required. It will however be appreciated that also the other herein disclosed advantages would be obtained if a receiving structure of the invention was used.

Even further, the present invention relates to use of a binder-fixed and form-stable mineral wool in a pot plant container for increasing the average total leaf length of an orchid, in particular a Phalaenopsis plant, after a propagation period from plugging of 12 weeks, (i) relative to a reference plant growth system, (ii) and/or wherein the average total leaf length is at least 40 cm, preferably at least 45 cm and more preferably 50 cm for Phalaenopsis york or Phalaenopsis zamora, and/or at least 10 cm, preferably 11 cm, more preferably at least 12 cm for mini multiflora Phalaenopsis plants.

It will be readily understood that the binder-fixed and form-stable mineral wool described in the context of uses of the invention preferably corresponds to the receiving structure described herein, in particularly in case all the advantages described herein are to be obtained. That means, specifications relating to the receiving structure given in the context of other aspects of the invention constitute according specifications of the binder-fixed and form-stable mineral wool.

The reference plant growth system corresponds to the plant growth system according to the present invention except that the receiving structure, respectively binder-fixed and form-stable mineral wool, has been replaced by a pourable substrate. Further, the reference plant growth system does not comprise one or more volume space(s) free of said pourable substrate. More specifically, the total volume which, in the case of the plant growth system of the invention, is occupied by the receiving structure and the one or more volume space(s) free of mineral wool, is in the case of the reference plant growth system occupied by said pourable substrate. The pourable substrate for example comprises 70 weight-% bark and 30 weight-% cocochips.

In summary, the means and methods of the invention lead to an increased and bigger root development, bigger stems, more shoots, larger leafs, and hence to a plant of increased quality than a corresponding plant obtained from cultivation in the current reference substrate (respectively reference plant growth system). It has been found that at the stage of 12 weeks from plugging, the occurrence of more and/or longer leafs is a good indicator of the existence of more flower stems/spikes and thus more flower parts and blossoms at the final stage of growing. Due to increased growth the total cultivation time can be shortened and brought faster on the market for sale. As a consequence more plants can be offered per year. Moreover, loss of plants due to potworm infestation is prevented, which has a significant advantageous economic impact on the grower.

The various embodiments described herein alone or in combination with other embodiments are generally meant to be combinable with one, more than one or all other embodiments, so that the disclosure effectively relates to all technically meaningful combinations of embodiments of the invention.
Figs. 1 and 2 schematically show, in two-dimensional sectional views, respective embodiments of whole or partial receiving structure shapes;
Figs. 3 and 4 schematically show, in two-dimensional sectional views, modified embodiments of the whole or partial receiving structure shapes of Figs. 1 and 2;
Fig. 5 schematically shows an embodiment, in a three-dimensional perspective view, of a whole receiving structure shape which is built from partial receiving structures of Figs. 1 and 2.
Fig. 6 shows a plant growth system according to an embodiment of the present invention, wherein the receiving structure of Fig. 5 has been placed inside an inner volume of a container.
Fig. 7 schematically shows, in a three-dimensional perspective view, another embodiment of a receiving structure according to the invention.

In the drawings and the following description of embodiments the plant receiving portion may receive a plant directly, or preferably it receives a plug comprising a plant and holding the plant or the plug in place; the following description will refer to both embodiments collectively by the term "plant receiving portion" 14/24/54/64/74.

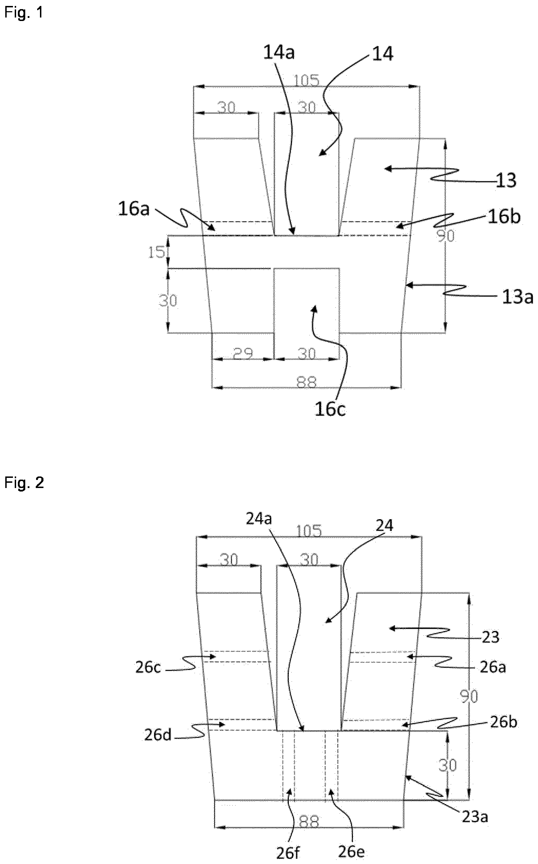

More specifically, Figs. 1 and 2 respectively show H-like and |_|-like structures representing possible shapes of the receiving structure.

When illustratively showing a complete shape, Fig. 1 is a cross-section of a three-dimensional rotational receiving structure 13 made of binder-fixed mineral wool, which forms the plant receiving portion 14 for later receiving a plug comprising a plant and holding it in place. Within the receiving structure 13, there are provided volume spaces free of mineral wool 16a, 16b in the form of open channels extending horizontally through the side wall 13a at two discrete locations projecting from the lower level 14a of the plant receiving portion 14. A volume space free of mineral wool 16c is formed between the bottom surface of the receiving structure and an essentially plane container inner bottom surface (if put in a container).

Similarly, when illustratively showing a complete shape, Fig. 2 is a cross-section of a three-dimensional rotational receiving structure 23 made of binder-fixed mineral wool, which forms the plant receiving portion 24 for later receiving a plug comprising a plant and holding it in place. Within the receiving structure 23, there are provided volume spaces free of mineral wool 26a, 26b, 26c, 26d in the form of open channels extending horizontally through the side wall 28 at four discrete locations, two projecting from the lower level 24a of the plant receiving portion 24 and two projecting from the an intermediate level. Additionally, two volume spaces free of mineral wool 26e, 26f extend through the bottom 23b of the receiving structure 23.

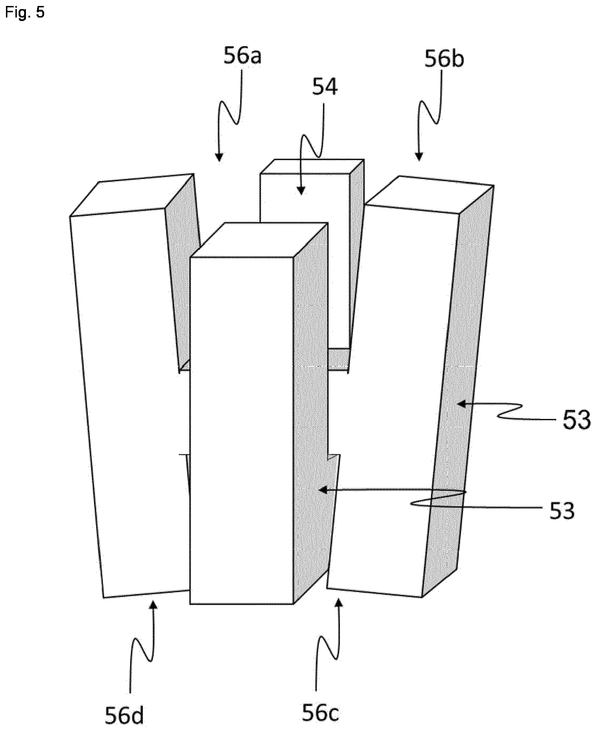

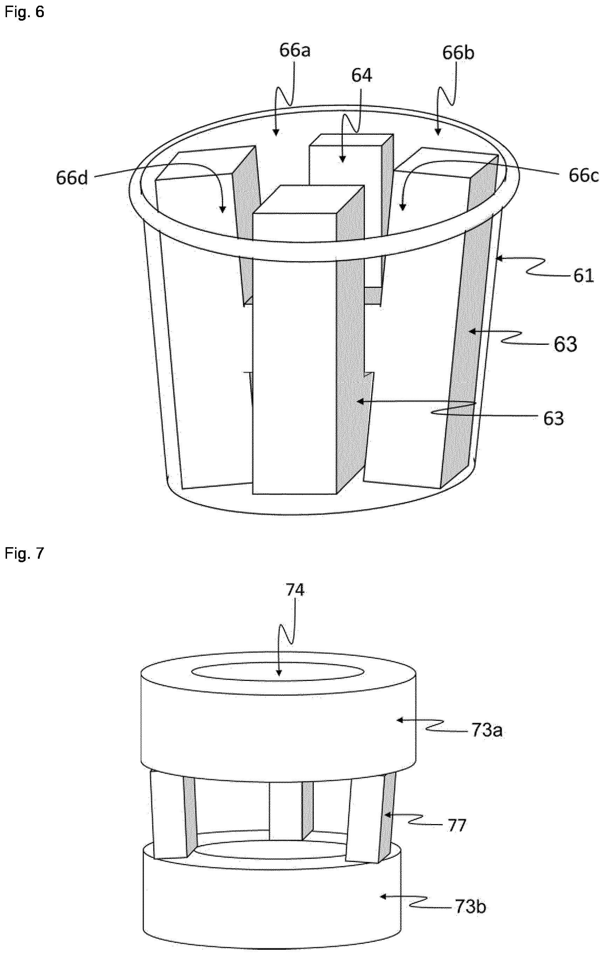

According to a modified embodiment, Figs. 1 and 2 show partial structures, which when combined form a receiving structure shown in Fig. 5. In this case, it is not the open channels and/or the bottom which forms mineral wool-free volume spaces, but these are formed between adjacent surfaces of the receiving structure and the inner side wall of the container as illustrated in Fig. 6.

For the above embodiments, dimensions which have been found to be particularly suited for growing orchids in a 12 cm plant pot (container) are indicated. Depth is 30 mm.

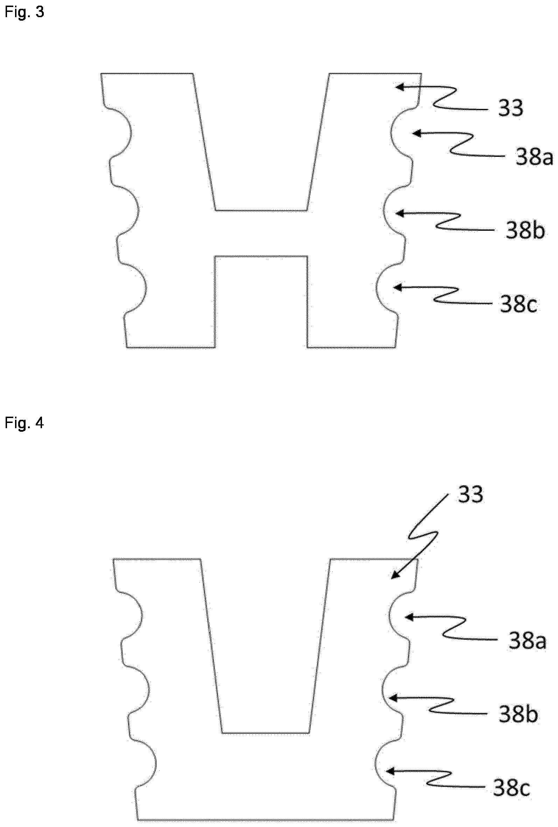

According to a modified embodiment of Figs 1 and 2 shown in Figs. 3 and 4, the H-like and, respectively, |_|-like shaped partial or whole receiving structures 33 comprise ridges 38a, 38b, 38c. Otherwise, the description given in the context of Figs. 1 and 2 apply.

According to the embodiment schematically shown in Fig. 5, H-like and |_|-like shaped partial structure respectively are assembled together in a rectangular pattern to form a receiving structure 53 forming a plant receiving portion 54 for later receiving a plug comprising a plant and holding it in place. There are provided volume spaces free of mineral wool 56a; 56b; 56c; 56d formed between adjacent surfaces of the receiving structure. More precisely and further referring to Fig. 6, the volume spaces free of mineral wool 66a, 66b, 66c, 66d are formed between adjacent surfaces of the receiving structure 63 and the inner side wall of a container 61.

According to a further embodiment schematically shown in Fig. 7, two ring-shaped partial structures 73a, 73b spaced apart by three spacer structures 77 arranged in between the two partial structures. A plant receiving portion 74 is defined by the inner surface of the partial structures 73a, 73b.

### Examples

### Comparative Example 1; Examples 2 to 8

In the Examples and the Comparison Example, two representative plants were tested. These belong to the genus of Phalaenopsis, an easy growing variety called York and a difficult growing variety with the name of Zamora.

All plants were provided in the form of a plug and were propagated therein for 23 weeks prior to the experiments to obtain the same propagation stage. Then, the plugs were divided into 8 groups for further growing in 8 different substrates contained in 12 cm transparent polyethylene plant pots for 14 weeks. The substrates used are specified in the Table 1 below.

The first group of plants was grown on a substrate comprised of 70 % bark and 30 % cocochips, corresponding to a hitherto optimal growth system. The plant pot was completely filled with said substrate. This system did not comprise free volume space(s) or any other structure and was used as a reference.

The other groups of plants were grown in accordance to the present invention. H-like and |_|-like shaped partial structures from binder-fixed mineral wool having the dimensions given in Figures 1 and 2, respectively, were assembled together in a rectangular pattern to form a receiving structure forming a plant receiving portion for introducing the plug comprising the plant. Volume spaces free of mineral wool formed between adjacent surfaces of the receiving structure and the inner side wall of a container as shown in Figure 6.

While the shape of the receiving structures used in groups 2 to 8 remained the same, fiber orientation and density of the mineral wool were varied. Moreover, the volume spaces free of mineral wool were air spaces in the case of groups 2 to 5, and were occupied by non-mineral substrates in the case of groups 6 to 8, namely bark, perlite and expanded clay, respectively.

**Table 1**

| **Substrate** / **group** | **Details of the components** |
|---|---|
| Example 1 (Comp.) | bark/cocochips 70-30 (reference substrate) |
| Example 2 | Binder fixed mineral wool, vertical fibre orientation, bulk density 80 kg/m³, remaining volume spaces forming air spaces |
| Example 3 | Binder fixed mineral wool, vertical fibre orientation, bulk density 120 kg/m³, remaining volume spaces forming air spaces |
| Example 4 | Binder fixed mineral wool, horizontal fibre orientation, bulk density 80 kg/m³, remaining volume spaces forming air spaces |
| Example 5 | Binder fixed mineral wool, horizontal fibre orientation, bulk density 120 kg/m³, remaining volume spaces forming air spaces |
| Example 6 | Binder fixed mineral wool, vertical fibre orientation, bulk density 80 kg/m³, remaining volume spaces filled with Bark 8-12 |
| Example 7 | Binder fixed mineral wool vertical fibre bulk density 80 kg/m³, remaining volume spaces filled with Perlite 2-6mm |
| Example 8 | Binder fixed mineral wool vertical fibre bulk density 80 kg/m³ remaining volume spaces filled with expanded clay (only used for Zamora) |

Growth was conducted in identical conditions for all Examples and plant groups, by placing them at equivalent positions in a culturing room (Fythotron) at a temperature of 28 degrees and an average humidity of between 65-70%. LED light supplied a total light level of 110 µmol•ml•s¹ to all plants identically. The plants were carefully monitored and the available moisture content of different substrates was measured. During the cultivation, data were collected with regard to the number of leafs per plant and the length of the leafs. In addition, photos have been taken.

Total growth in leaf length was recorded from week 4 - week 12.

Table 2 below show the results that have been recorded at different time points during the cultivation (after 4 weeks, 6 weeks, 8 weeks, 10 weeks and 12 weeks). The penultimate column indicates the growth from week 4 to week 12 and the last column shows the difference in growth in relation to the reference substrate.

**Table 2**

| **Substr. / group** | Plant | wk4 (cm) | wk 6 (cm) | wk8 (cm) | wk10 (cm) | wk12 (cm) | growth wk4-wk12 | growth wk4-wk12 relative to reference |
|---|---|---|---|---|---|---|---|---|
| 1 | York | 29,85 | 32,15 | 34,65 | 38,55 | 41,7 | 11,85 | 0 |
| 2 | York | 29,35 | 33,2 | 38,5 | 45,75 | 60,7 | 31,35 | 19,5 |
| 3 | York | 31,85 | 35,25 | 38,85 | 44,95 | 56,1 | 24,25 | 12,4 |
| 4 | York | 30,9 | 33,95 | 38,65 | 43,95 | 53,3 | 22,4 | 10,55 |
| 5 | York | 30,05 | 33,7 | 38,5 | 44,45 | 56 | 25,95 | 14,1 |
| 6 | York | 28,15 | 32,4 | 37,85 | 44,45 | 48,1 | 19,95 | 8,1 |
| 7 | York | 29,8 | 33,6 | 39,5 | 45,45 | 53,2 | 23,4 | 11,55 |
| | | | | | | | | |
| | | | | | | | | |
| 1 | Zamora | 33,3 | 35,55 | 37,65 | 40,25 | 43,9 | 10,6 | 0 |
| 2 | Zamora | 33,1 | 35,2 | 39,6 | 45,55 | 56,4 | 23,3 | 12,7 |
| 3 | Zamora | 37,5 | 39,15 | 42,9 | 49,614 | 59,3 | 21,8 | 11,2 |
| 4 | Zamora | 34,25 | 36,3 | 40,8 | 46,8 | 54,2 | 19,95 | 9,35 |
| 5 | Zamora | 33,85 | 35,95 | 39,9 | 45,3 | 49,6 | 15,75 | 5,15 |
| 8 | Zamora | 36,05 | 38,85 | 43,55 | 50,55 | 61,4 | 25,35 | 14,75 |
| 6 | Zamora | 35,25 | 37,1 | 41,1 | 48 | 59,5 | 24,25 | 13,65 |
| 7 | Zamora | 35,2 | 37,35 | 42,55 | 48,05 | 62 | 26,8 | 16,2 |

The relative growth increase after 12 weeks was determined from Table 2 as follows:

**Table 3**

| Substrate / group | growth increase relative to reference [%] | |
|---|---|---|
| | Plant = York | Plant = Zamora |
| 2 | 146 | 128 |
| 3 | 135 | 135 |
| 4 | 128 | 123 |
| 5 | 134 | 113 |
| 6 | 115 | 136 |
| 7 | 128 | 141 |
| 8 | n. d. | 140 |

As demonstrated, independent from the plant variety the total growth of leaf length was consistently increased, and was surprisingly enhanced significantly, in all embodiments of a plant growth system according to the present invention compared with the reference growth system previously considered to be optimal for the plants. The measurement data were confirmed by visual inspection, increased total leaf length of the plants grown according to the present invention were associated with strong, health looking leafs.

In week 12, destructive measurements were carried out on 5 plants per treatments. Leaf and root fresh weight and dry weights were determined and given in Table 4.

**Table 4. Fresh and dry weight of leaf and roots per plant after 12 weeks. Cultivars 1= York and 2 = Zamora.**

| **Substrate** | **Cultivar** | **Fresh_W leaf** | **Fresh_W roots** | **Dry_W leaf** | **Dry_W roots** | **% DW leaf** | **% DW roots** |
|---|---|---|---|---|---|---|---|
| | | gram/pl | gram/pl | gram/pl | gram/pl | % | % |
| **1** | 1 | 26,72 | 31,46 | 1,84 | 2,37 | 6,9% | 7,6% |
| **2** | 1 | 35,00 | 33,03 | 2,38 | 2,38 | 6,8% | 7,2% |
| **3** | 1 | 34,63 | 30,29 | 2,41 | 2,49 | 7,0% | 8,2% |
| **4** | 1 | 34,98 | 30,47 | 2,39 | 2,22 | 6,8% | 7,3% |
| **5** | 1 | 33,96 | 26,70 | 2,36 | 2,09 | 6,9% | 7,8% |
| **6** | 1 | 33,01 | 30,76 | 2,20 | 2,18 | 6,7% | 7,1% |
| **7** | 1 | 31,66 | 27,76 | 2,26 | 2,25 | 7,1% | 8,1% |
| **1** | 2 | 24,70 | 26,26 | 1,81 | 2,16 | 7,3% | 8,2% |
| **2** | 2 | 28,01 | 25,66 | 2,13 | 2,08 | 7,6% | 8,1% |
| **3** | 2 | 30,97 | 26,88 | 2,25 | 2,08 | 7,3% | 7,7% |
| **4** | 2 | 25,20 | 22,40 | 1,92 | 1,91 | 7,6% | 8,5% |
| **5** | 2 | 24,16 | 21,16 | 1,82 | 1,83 | 7,5% | 8,6% |
| **6** | 2 | 30,52 | 25,90 | 2,22 | 2,19 | 7,3% | 8,4% |
| **7** | 2 | 29,66 | 26,76 | 2,25 | 2,22 | 7,6% | 8,3% |
| **8** | 2 | 36,39 | 30,98 | 2,74 | 2,56 | 7,5% | 8,3% |

As demonstrated above, the present invention provides for both leaf and root weight increase relative to the reference plant growth system.

It was further found that the number and the length of leafs at the observed growth stage (wk 12) in embodiments of a plant growth system according to the present invention correlated well with the number of spikes and flowers of the plant at a late stage of the whole growing phase.

### Example 9

In a further Example, pot worm control is tested by the following two methods.
a) The bottom of plant pots from Examples 1 to 8, comprising the plants grown for 12 weeks on different substrates, is respectively removed and the thus modified plant pots are directly put on a surface infested with pot worms. Pot worm infection is assessed after a few weeks by conventional methods in the art.
b) Plant pots of a plant growth system according to the present invention, comprising the plants grown for 12 weeks on different substrates, are arranged directly adjacent to each other, and are placed adjacent to and around a reference plant (group 1) being infested with pot worms. After a few weeks it is determined whether or not, and if so to which extent, pot worms infested plants from the other groups. In a comparison test, group 1 of reference plants are placed adjacent to and around a reference plant (group 1) being infested with pot worms.

## Claims

1. A plant growth system comprising:
(a) a container (61) having a top opening and an inner volume;
(b) a receiving structure (13; 23; 33; 43; 53) inside the inner volume of the container, wherein said receiving structure is form-stable, and comprises mineral wool, preferably coherent mineral wool;
(c) a plant receiving portion (14; 24; 54; 64; 74) formed by the receiving structure for receiving a plant or a plug comprising a plant through the top opening of the container into said plant receiving portion and holding it in place; and
(d) one or more volume space(s) (16; 26; 56; 66) free of the mineral wool comprised in the receiving structure.

2. The plant growth system according to claim 1, wherein the one or more volume space(s) free of the mineral wool of component (b) occupy the remaining space of the inner volume of the container not being occupied by the receiving structure and the plant receiving portion, preferably the one or more volume space(s) free of the mineral wool are air space(s) and/or are occupied by non-fixed mineral wool or by non-mineral wool substrate(s).

3. The plant growth system according to any one of the preceding claims, wherein the plant receiving portion is in communication with an inner surface of the container through the one or more volume space(s) free of mineral wool.

4. The plant growth system according to any one of the preceding claims, wherein the receiving structure is selected from |_|-, \_/- ,U-, H-, V-, X-, Y- and ring-shaped structures, or wherein the receiving structure is built by at least two separate partial structures, wherein the partial structures are selected from |_|-, \_/-, U-, H-, V-, X-, Y- and ring-shaped structures, or wherein the receiving structure is built by a first partial structure being |_|-, \_/- , U-, V- or X- and preferably |_|- or \_/-shaped, and a second partial structure being H- or X- and preferably H-shaped.

5. The plant growth system according to any one of the preceding claims, wherein the one or more volume space(s) free of mineral wool amount to at least 5 % and/or at most 90 %, preferably 5 - 50 %, more preferably 10 - 50 %, even more preferably 20 - 40 %, in particular 25 - 35 % relative to the total inner volume of the container.

6. The plant growth system according to any one of the preceding claims, wherein the receiving structure occupies a volume in the range of 10 - 95 %, preferably 40 - 90 % and more preferably 50 - 80 %, relative to the total inner volume of the container.

7. The plant growth system according to any one of the preceding claims, wherein the receiving structure comprises ridges (38) allowing circumferential root growth along an inner surface of the container.

8. The plant growth system according to any one of the preceding claims further comprising a plant or a plug containing a plant.

9. The plant growth system according to any one of the preceding claims, wherein the plant is selected from the group consisting of pot plants and wherein the pot plant is preferably selected from the group consisting of flowering plants, ornamental plants, house plants, cacti, palm trees, tree nursery plants, vegetable, soft fruit plants, and herbs, preferably flowering plants, more preferably Rosales (preferably Cannabaceae, in particular Cannabis), orchids and in particular Phalaenopsis.

10. A receiving structure (13; 23; 33; 43; 53) for growing a plant, wherein said receiving structure is form-stable, and comprises mineral wool, preferably essentially consisting of coherent mineral wool, wherein the receiving structure forms a plant receiving portion (14; 24; 54; 64; 74) for receiving a plant or a plug comprising a plant and holding it in place, wherein the plant receiving portion communicates via one or more volume space(s) (16; 26; 56; 66) free of the mineral wool comprised in the receiving structure, other than the volume defined by the plant receiving structure, with the outside of the receiving structure.

11. The receiving structure according to claim 10, wherein the receiving structure is as defined as in claim 4 or 7, and/or, when inserted into a container having a top opening, and optionally when receiving a plant or a plug comprising a plant, is as defined as in any one of claims 1 to 9.

12. A method for growing a plant and/or protecting plants from attack or infestation by a nematode selected from the group consisting of Keroplatidae and in particular Lyprauta spp, the method comprising, if necessary introducing a plant or a plug comprising a plant into the plant receiving portion of a receiving structure located in a container, and allowing the plant to grow, wherein the receiving structure and the container, and optionally the plant or the plug comprising the plant, are as defined in any one of preceding claims 1 to 10.

13. Use of a plant growth system as defined in any one of preceding claims 1 to 9 or a receiving structure as defined in any one of preceding claims 10 to 11 for improving growth of a plant and/or protecting the plant from attack or infestation by a nematode selected from the group consisting of Keroplatidae and in particular Lyprauta spp. and/or as a substitute for natural organic substrate and particularly as a substitute for fossil substrates, wherein the plant is preferably selected from the group consisting of epiphytes, more preferably orchids and in particular Phalaenopsis.

14. Use of binder-fixed and form-stable mineral wool in a pot plant container for controlling and/or protecting a plant from attack or infestation by a nematode worm selected from the group consisting of Keroplatidae and in particular Lyprauta spp..

15. Use of a binder-fixed and form-stable mineral wool in a pot plant container for increasing the average total leaf length of an orchid plant, in particular Phalaenopsis, after a propagation period from plugging of 12 weeks, relative to a reference plant growth system and/or wherein the average total leaf length is at least 40 cm, preferably at least 45 cm and more preferably 50 cm for Phalaenopsis york or Phalaenopsis zamora, and/or at least 10 cm, preferably 11 cm, more preferably at least 12 cm for mini multiflora Phalaenopsis plants.
